# EUROPEAN PATENT APPLICATION

(11) **EP 1 394 895 A1**
(43) Date of publication of application: **03.03.2004**
(21) Application number: 02019546.7
(22) Date of filing: 02.09.2002
(51) Int. Cl.: H01Q 1/24, H01Q 17/00, H04B 1/38

(54) **Directive antenna elements**

(71) Applicant: Sony Ericsson Mobile Communications AB, 221 88 Lund (SE)
(72) Inventor: Lindell, Karl Bo, 181 46 Lidingo (SE)
(74) Representative: Dahnér, Christer

(57) **Abstract**

The present invention relates to a portable communication device, an antenna arrangement and a case for a portable communication device. The portable communication device comprises a casing including a first in-built driven antenna element (26) extending a length along a longest side of the casing. Either the portable communication device or the case includes at least one passive beam directive element (32) distanced from and generally extending along at least most of the same length as the first in-built driven antenna element. Because of this electromagnetic radiation generated by the first in-built driven antenna element is enhanced in a direction away from a side (18) of the casing intended to be facing a user.

## Description

### TECHNICAL FIELD OF THE INVENTION

The present invention relates to the field of antennas and more particularly to a portable communication device including a directive antenna, such an antenna arrangement for a portable communication device as well as to a case which includes a passive directive antenna element.

### DESCRIPTION OF RELATED ART

The antennas within the field of portable communication devices, especially mobile phones, are normally radiating in all directions. When a user of for instance a phone uses it, either for talking or sending messages, part of the radiation is blocked by the body of the user, which leads to a less satisfactory performance of the phone when contacting a base station than what could be obtained. This in turn leads to a higher power consumption in the phone than what should be necessary.

There has been implemented or tried to be implement different ways of getting directive radiation from a mobile phone in order to increase it's efficiency. The antenna elements are however in most cases small, which leads to other parts of the phone doing much of the radiation, like for instance the shielding, if the radio circuit driving the antenna element is connected to it. The directive element has also been provided in relation to the small antenna, which therefore leads to only small parts of the radiated electromagnetic field being redirected. None of these types of solutions have therefore been very effective.

In WO-0237600 there is described a mobile phone having an antenna system provided within the casing of the phone. The antenna is made up of the shielding, casing or chassis of the phone and is fed against a counterpoise provided at one end of the antenna. The antenna described here is not a directive antenna though.

There thus exists a need of providing directivity for antennas that have in-built radiating parts in the casing of portable communication devices.

### SUMMARY OF THE INVENTION

The present invention is directed towards solving the problem of directing radiation away from the body of a user of a portable communication device including an in-built antenna.

The invention is furthermore based on the understanding that large electrical elements like the shielding or the circuit board contribute to the radiation from a portable communication device, even if other small antenna elements are connected to the radio circuits of the device.

One object of the present invention is thus directed towards providing a portable communication device including a first in-built driven antenna element, which device directs radiation away from the body of a user.

According to a first aspect of the present invention, this object is achieved by a portable communication device comprising:
a casing including a first in-built driven antenna element extending a length along a longest side of the casing, and
at least one passive beam directive element on or within the casing distanced from and generally extending along at least most of the same length as the first in-built driven antenna element, such that electromagnetic radiation generated by the in-built driven antenna element is enhanced in a direction away from a first side of the casing, which first side is intended to be facing a user.

A second aspect of the present invention is directed towards a portable communication device including the features of the first aspect, wherein the first in-built driven antenna element furthermore extends along most of the longest side.

A third aspect of the present invention is directed towards a portable communication device including the features of the first aspect, wherein the passive beam directive element is furthermore coupled with parasitic impedance to the first in-built driven antenna element.

A fourth aspect of the present invention is directed towards a portable communication device including the features of the first aspect, wherein the first in-built driven antenna element is end-fed and further including a second driven antenna element located near the feed end of the first in-built driven antenna element.

A fifth aspect of the present Invention is directed towards a portable communication device including the features of the fourth aspect, wherein the at least one passive beam directive element furthermore has a capacitive coupling to the second driven antenna element.

A sixth aspect of the present invention is directed towards a portable communication device including the features of the first aspect, wherein the at least one passive beam directive element comprises at least one director adjacent a second side of the casing not facing a user of the device in order to direct at least part of the radiation away from the user.

A seventh aspect of the present invention is directed towards a portable communication device including the features of the sixth aspect, wherein the director furthermore is provided in the form of a metallic strip.

An eighth aspect of the present invention is directed towards a portable communication device including the features of the first aspect, wherein the at least one passive beam directive element comprises at least one reflector adjacent the first side of the casing in order to deflect radiation irradiated in a direction towards the first side.

A ninth aspect of the present invention is directed towards a portable communication device including the features of the eighth aspect, wherein the reflector is provided in the form of a metallic strip.

A tenth aspect of the present invention is directed towards a portable communication device including the features of the first aspect, wherein the first in-built driven antenna element comprises the shielding of electronic components.

An eleventh aspect of the present invention is directed towards a portable communication device including the features of the first aspect, wherein the first in-built driven antenna element comprises a main circuit board of the portable communication device comprising electronic components.

A twelfth aspect of the present invention is directed towards a portable communication device including the features of the first aspect, in which it is a mobile phone.

Another object of the present invention is directed towards providing an antenna arrangement including a first in-built driven antenna element, which directs radiation away from the body of a user.

According to a thirteenth aspect of the present invention, this object is achieved by an antenna arrangement to be provided in the casing of a portable communication device, comprising:
a first in-built driven antenna element to be placed such that it extends a length along a longest side of the casing, and
at least one passive beam directive element to be placed at a distance from and along at least most of the same length as the first in-built driven antenna element, such that electromagnetic radiation generated by the in-built driven antenna element is enhanced in a direction away from a first side of the casing, which first side is intended to be facing a user.

Another object of the present invention is directed towards providing a case for a portable communication device including a first in-built driven antenna element, which case directs radiation away from the body of a user.

According to a fourteenth aspect of the present invention, this object is achieved by a case fastenable to the human body of a user for holding a portable communication device that comprises a casing including a first in-built driven antenna element extending along a longest side of the casing, wherein the case comprises at least one passive beam directive element generally extending along at least most of the same length as the first in-built driven antenna element and provided on or within a side of the case distanced from and generally extending along at least most of the same length as the first in-built driven antenna element when the portable communication device is placed in the case, such that electromagnetic radiation generated by the in-built driven antenna element is enhanced in a direction away from a side of the casing, which side faces the user, when the portable communication device is placed in the case.

The invention uses the fact that when a large electrical element is connected to a radio circuit, this element will contribute considerably to the radiation, even if other considerably smaller radiating elements are connected to the radio circuits.

The invention has the following advantages. It allows less power consumption because it can use less power when transmitting than other types of similar antennas. It provides better contact with base stations. It is cheap and easy to implement in a portable communication device, since it can be provided In the form of metallic strips.

The term beam directive element is intended to cover both reflective and directive elements.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a top view of portable communication device in the form of a mobile phone,
fig. 2 schematically shows a side view of the phone in fig. 1,
fig. 3 schematically shows a side view from the same side as in fig. 2 of the antenna arrangement in the mobile phone according to a first embodiment,
fig. 4 schematically shows a bottom view of the antenna arrangement in the mobile phone according to the first embodiment,
fig. 5 schematically shows a side view from the same side as in fig. 2 of the antenna arrangement in the mobile phone according to a second embodiment,
fig. 6 schematically shows a top view of the antenna arrangement in the mobile phone according to the second embodiment, and
fig. 7 schematically shows an accessory in the form of a belt provided with a case according to a variation of the invention.

### DETAILED DESCRIPTION OF EMBODIMENTS

A portable communication device according to the invention will now be described in relation to a mobile phone, which is a preferred variation of the invention. It can be other types of devices though, like a cordless phone, a communication module, a PDA or any other type of portable device communicating with radio waves. There will most likely be a number of varying portable communication devices In the future when the 3^{rd} generation cellular systems are implemented.

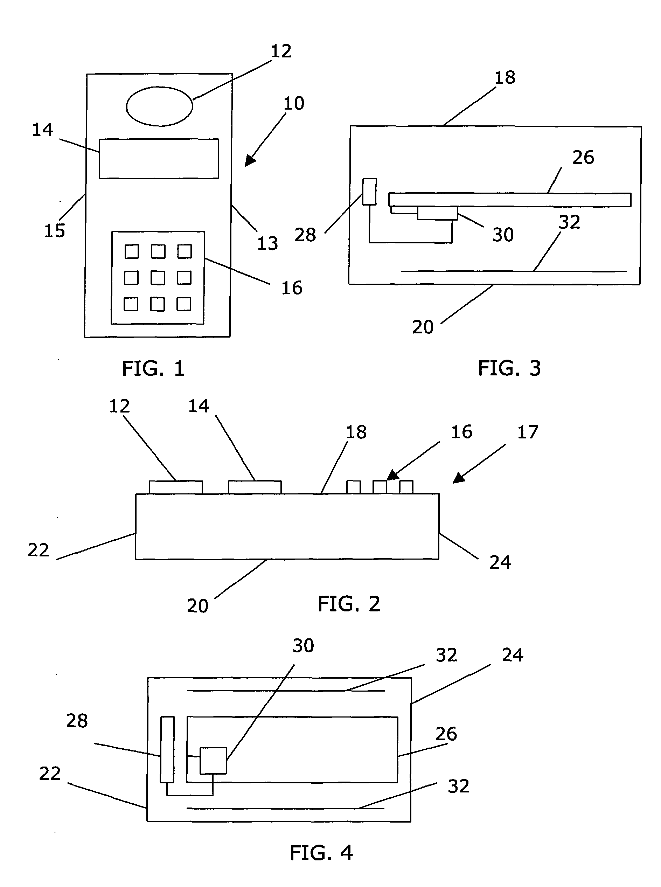

Fig. 1 shows a top view of a phone 10 according to the invention. The phone 10 has a speaker 12, a display 14 and a keypad 16 including a number of keys. The keypad 16 is used for entering information such as selection of functions and responding to prompts and the display 14 is used for displaying functions and prompts to a user of the phone. The phone has two longest sides 13 and 15, which are provided between a top end and a bottom end of the phone. The phone in fig. 1 does also have an antenna. This antenna is however provided inside the casing of the phone. Fig. 2 shows a side view of the phone depicted in fig. 1, viewed from one of the longest sides, side 15. The phone has a casing 17 with a box like shape having a first side 18 intended to face a user and a second side 20 intended to face away from the user as well as a top side 22 and a bottom side 24. The previously mentioned speaker 12, display 14 and keypad 16 protrude from the first side 18 of the casing 17, which thus has openings for these elements. It should be realised that the phone in fig. 2 is just an example. It does not have to be box-like in shape. It can naturally have for example more rounded corners and also be provided with another display, like a large touch screen. The casing can also have more openings, like for instance an opening for a system connector and be provided with suitable means for connecting and disconnecting a battery.

Fig. 3 and 4 show different views of a phone according to a first and preferred embodiment of the invention. This embodiment is currently believed to be the best mode to practise the invention. Fig. 3 shows a schematic side view of the parts of the phone relevant to the antenna inside the casing and fig. 4 shows a schematic bottom view of the same relevant parts, i.e. seen from the second side 20 of the phone or from the side intended to face away from a user using the phone. It should be realised that the size, dimensions and proportions of the parts shown in the figures are not to scale but only provided in order to get an understanding of the invention. A phone is for instance normally much thinner than what is shown in fig. 3. The drawing is made thicker in order to get a better view of the involved elements. The phone includes a first in-built driven antenna element 26 in the form of an end-fed main circuit board 26 provided in the middle of the phone and extending a length along the side of the phone as far as possible from the bottom side up to a small distance from the top side. In the ideal case it extends all the way from the bottom side up to the top side. However, because of certain design limitations it is in reality never really possible to do this because of the inclusion of other elements in the phone, like for instance speakers, cameras etc. The phone also comprises a second in-built driven antenna element in the form of a small metallic plate 28 provided near the top side of the phone, between the main circuit board and said top side, and a radio circuit 30 provided on the main circuit board. This plate is one such element that might take up space needed by the first antenna element. The radio circuit 30 is connected between the second in-built driven antenna element 28 and the top end of the main circuit board 26, i.e. the end closest to the second in-built driven antenna element 28. The second in-built driven antenna element 28 is thus provided near the feed end of the first in-built driven antenna element 26.

The radio circuit 30 feeds the main circuit board as antenna and using the small metallic plate 28 as counterpoise within a certain frequency band used by the phone. How this feeding can be done is disclosed in more detail in WO-0237600, which is herein incorporated by reference. In a preferred embodiment the circuit board has a length approaching a half wavelength at the operating frequency band (e.g. around 900 MHz for a cellular phone). Two passive beam directive elements in the form of long directors 32 are provided along the length of the phone near the second side 20 close to the two long sides 13, 15 of the phone within the casing. The directors 32 are provided in the form of two metallic strips and here of copper. They are thus placed along the same direction as the first antenna element, i.e. along a longest side of the phone and they stretch at least along most of the same length as the first in-built driven antenna element. The directors are coupled with parasitic impedance to the first antenna element 26, i.e. they have a capacitive and inductive coupling to it. They also have a capacitive coupling to the counterpoise 28. By adjusting the length and width of the stripes and the distance to the counterpoise, optimum current distribution has been obtained. When dimensioning the strips a consideration has to be made regarding bandwidth too. Too good a directivity will reduce the bandwidth, which means that a compromise has to be made.

It should be realised that provision of these directors along the length of a first driven antenna element will provide directivity as long as much of the radiation emanates from the circuit board. This is frequently the case with commonly used antennas of PIFA (Planar Inverted-F Antenna) or small helix type.

There are many variations that can be made to the above-described antenna. It is possible to have more directors provided than two. They should however be placed generally along the same length as the first antenna element and near the bottom side. It is also possible to have only one element. They can have different shapes, like be formed as one plate or have meandering structure. In case radiation is wanted towards another side, they can also be placed for instance along the top or bottom sides. They can furthermore be provided on the casing instead of within it.

As an alternative the second driven element can also be placed at the opposite end of the phone. It is also possible to have a different shape on the second driven antenna element. It can for instance have some type of meandering structure. The first antenna element can furthermore be provided by the chassis of the phone or by the shielding of the phone.

The director material can also be varied. It can for instance be provided as metalisation on a plastic tape, conducting colour or as a stainless steel sheet.

Yet another variation is that the phone can have another frequency range it works within. Then other directors having other lengths can in the same way be provided for that frequency range. The phone would then have these directors in addition to the previously mentioned directors. In this case the first driven antenna element can be inductively connected to a small plate provided at the opposite side than the counterpoise. This plate will then lengthen the electrical length of the antenna element for better performance at the second frequency band.

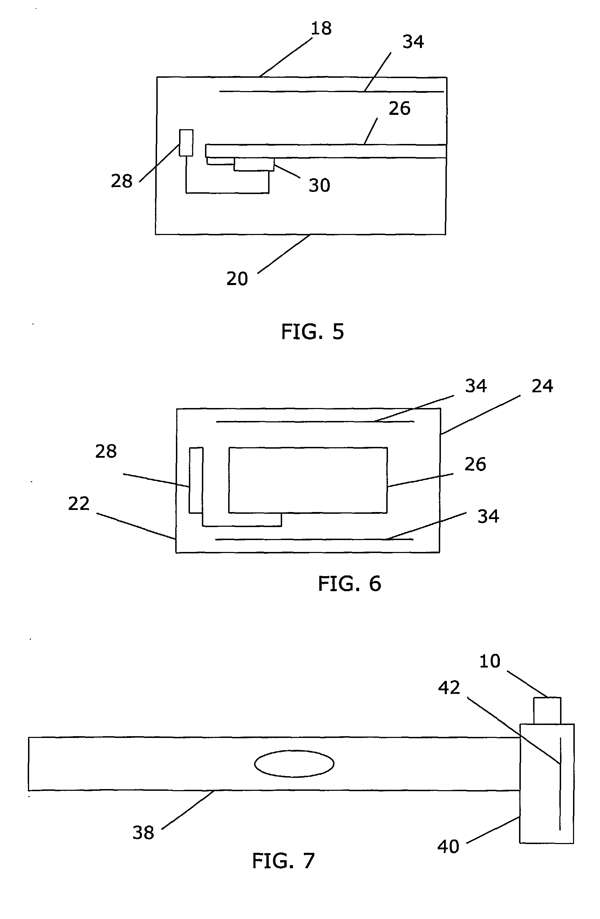

A second embodiment of the present invention will now be described in relation to fig. 5 and 6, where fig. 5 shows a schematic side view of the parts relevant to the antenna inside the casing from the same side as fig. 3 and fig. 4 shows a schematic top view of the same relevant parts, i.e. seen from the first side of the phone or from the side intended to face a user using the phone. The first and second inbuilt driven antenna elements 26 and 28 as well as the radio circuits are the same as described in relation to fig. 3 and 4. Here there are no directors though. Instead the passive beam directive elements are provided in the form of two reflectors 34 provided along the first side 18 of the phone and stretching in the same direction as the first in-built driven antenna element 26. These are provided along the length of the phone in the same way as the directors, but are here dimensioned for reflecting the radiation, why the dimensioning of them is different than for the directors. Also these are provided in the form of metallic strips and here copper, but the materials can be varied in the same way as for the directors. The number can in the same manner also be varied, as can also the sizes. There can of course also be additional reflectors provided for another frequency band. It should also be realised that the two described embodiments can be provided at the same time, i.e. that a phone can be provided with both reflectors and directors.

The passive beam directive elements normally function best when they are placed a few centimetres, like about four centimetres, from the first antenna element. Normally this is not possible to do in a phone because of size constraints. This fact can however be used in another way, which will be described in relation to fig. 7. Fig. 7 shows a belt 38 used by a user. On this belt is provided a case 40 holding a phone 10. The belt has a director in the form of one or more metallic strips, preferably copper, provided on the side facing away from the user and along the length where the phone is longest and also along the length of the first antenna element. In this way an even better directivity is obtained because the director is placed at a greater distance from the first in-built driven antenna element of the phone. This case has the further advantage in that it does not matter how you place the phone in it as long as the case faces away from the body. This case will have good directive effect when the user uses the phone when it is placed in the belt. This can happen if the user also has a hands-free device. A reflector can of course also be provided in the case on the side facing the user, either combined with the just described director or in addition to it. In this case it is of course also possible to provide more directors and/or reflectors than just one of each. It is of course also possible to provide more directors/reflectors for other frequencies.

With the present invention good directivity of an antenna will be obtained. It is furthermore likely that the present invention will provide good directivity for antennas with small sized antenna elements, when the where the chassis, shielding or main circuit board is radiating. The invention can thus be used with good results together with normal small-sized in-built antenna elements and small external antenna elements protruding from the casing.

The present invention has the following advantages. It allows less power consumption because it has to use less power when transmitting than other types of similar antennas without directors/reflectors. It provides better contact with base stations. It is cheap and easy to implement in a portable communication device, since it can be provided in the form of metallic strips.

## Claims

1. Portable communication device (10) comprising:
a casing including a first in-built driven antenna element (26) extending a length along a longest side of the casing,
**characterised by** at least one passive beam directive element (32; 34) on or within the casing distanced from and generally extending along at least most of the same length as the first in-built driven antenna element, such that electromagnetic radiation generated by the in-built driven antenna element is enhanced in a direction away from a first side (18) of the casing, which first side is intended to be facing a user.

2. Portable communication device according to claim 1, wherein the first in-built driven antenna element extends along most of the longest side.

3. Portable communication device according to claim 1 or 2, wherein the passive beam directive element is coupled with parasitic impedance to the first in-built driven antenna element.

4. Device according to any previous claim, wherein the first in-built driven antenna element is end-fed and further including a second driven antenna element (28) located near the feed end of the first in-built driven antenna element.

5. Device according to claim 4, wherein the at least one passive beam directive element has a capacitive coupling to the second driven antenna element.

6. Device according any previous claim, wherein the at least one passive beam directive element comprises at least one director (32) adjacent a second side (20) of the casing not facing a user of the device in order to direct at least part of the radiation away from the user.

7. Device according to claim 6, wherein the director is provided in the form of a metallic strip.

8. Device according to any previous claim, wherein the at least one passive beam directive element comprises at least one reflector (34) adjacent the first side (18) of the casing in order to deflect radiation irradiated in a direction towards the first side.

9. Device according to claim 8, wherein the reflector is provided in the form of a metallic strip.

10. Device according to any previous claim, wherein the first in-built driven antenna element comprises the shielding of electronic components.

11. Device according to any of claims 1 - 9, wherein the first in-built driven antenna element comprises a main circuit board of the portable communication device comprising electronic components.

12. Device according to any previous claim, in which it is a mobile phone.

13. Antenna arrangement to be provided in the casing of a portable communication device, comprising:
a first in-built driven antenna element (26) to be placed such that it extends a length along a longest side of the casing, and
at least one passive beam directive element (32; 34) to be placed at a distance from and along at least most of the same length as the first in-built driven antenna element, such that electromagnetic radiation generated by the in-built driven antenna element is enhanced in a direction away from a first side (18) of the casing, which first side is intended to be facing a user.

14. Case (40) fastenable to the human body of a user for holding a portable communication device (10) that comprises a casing (17) including a first in-built driven antenna element (26) extending along a longest side of the casing, **characterised by** at least one passive beam directive element (42) generally extending along at least most of the same length as the first in-built driven antenna element and provided on or within a side of the case distanced from and generally extending along at least most of the same length as the first in-built driven antenna element when the portable communication device is placed in the case, such that electromagnetic radiation generated by the in-built driven antenna element is enhanced in a direction away from a side of the casing, which side faces the user, when the portable communication device is placed in the case.
